(19) **Europäisches Patentamt European Patent Office Office européen des brevets**

(11) **EP 3 879 802 B1**

(12) **EUROPEAN PATENT SPECIFICATION**

(45) Date of publication and mention
of the grant of the patent:
**27.12.2023 Bulletin 2023/52**

(21) Application number: **20162443.4**

(22) Date of filing: **11.03.2020**

(51) International Patent Classification (IPC):
**H04M 11/06** $^{(2006.01)}$

(52) Cooperative Patent Classification (CPC):
**H04M 11/062**

(54) **METHOD AND DEVICE FOR SELECTING A DSL CONNECTION PROFILE FOR A DSL CONNECTION**

VERFAHREN UND VORRICHTUNG ZUR AUSWAHL EINES DSL-VERBINDUNGSPROFILS FÜR EINE DSL-VERBINDUNG

PROCÉDÉ ET DISPOSITIF DE SÉLECTION D'UN PROFIL DE CONNEXION DSL POUR UNE CONNEXION DSL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.09.2021 Bulletin 2021/37**

(73) Proprietor: **Deutsche Telekom AG 53113 Bonn (DE)**

(72) Inventor: **QUADE, Michael 53340 Meckenheim (DE)**

(74) Representative: **Blumbach · Zinngrebe Patentanwälte PartG mbB Elisabethenstrasse 11 64283 Darmstadt (DE)**

(56) References cited:
**EP-A1- 2 209 324       US-A1- 2006 268 733 US-A1- 2010 162 359       US-A1- 2011 134 983**

**Description**

The invention generally relates to digital subscriber line (DSL) data transmission and in particular to a method and a device for selecting a DSL connection profile for a DSL connection.

Digital subscriber line (DSL) is a family of technologies that are used to transmit digital data over telephone lines. The various DSL technologies typically are collectively referred to as xDSL, wherein xDSL may exemplary refer to ADSL (Asymmetric DSL), SDSL (Symmetric DSL), HDSL (High Speed DSL), VDSL (Very High Speed DSL), ADSL2, ADSL2+, HDSL2, SHDSL, VDSL2, vectored VDSL2, G.fast. The different DSL technologies are commonly implemented in accordance with respective standards, exemplary comprising the ITU standards G.992.1, G.992.3, G.992.5, G.993.1, G.993.2, G.993.5, G.998.4, G.994.1 and G.997.1.

A DSL connection is typically established between a digital Subscriber Line Access Multiplexer (DSLAM) and a DSL modem which is arranged at customer premises. Instead of DSLAMs increasingly Multi-Service Access Multiplexers (MSAN) are employed, also referred to as multi-service access gateways (MSAG), which provide telephone, ISDN, and broadband such as DSL all from a single platform.

A DSLAM or MSAN is connected to a plurality of subscriber lines and may be located in a telephone exchange such as a central office (CO) or close to the connection of the customer in a service area interface cabinet, wherein the latter is also referred to as outdoor DSLAM or outdoor MSAN. A typical outdoor MSAN cabinet comprises narrowband (POTS) and broadband (xDSL) services, an optical transmission unit and a copper distribution frame.

The DSL traffic typically is switched by the DSLAM or MSAN to a Broadband Remote Access Server (BRAS), also referred to as Broadband Network Gateway (BNG), from where the end-user traffic is then routed across the core network of an Internet service provider (ISP) to the Internet.

The widely employed ADSL and VDSL2 technologies utilize discrete multitone modulation (DMT) which is a modulation scheme that allows the transmission to be adapted individually for each subcarrier by means of so-called bit loading. Through bit loading a DSL connection can be adjusted to the channel conditions of the subscriber line as determined during training and initialization of the modems at the ends of the subscriber line, i.e. the customer DSL modem and the associated DSL modem in the DSLAM or MSAN. In addition to bit loading typically further parameters of a DSL connection may be configured, such as forward error correction (FEC) and interleaving.

Through parameter configuration the data rate and the stability of a DSL connection may be adjusted, wherein these characteristics are typically inversely proportional, i.e. a higher data rate results in lower stability and a higher stability can be achieved by reducing the data rate.

Typically, it is desirable to achieve a configuration in which an optimal trade-off between data rate and stability is achieved.

A system and method for optimizing DSL line configurations and parameters in a DSL system is known for instance from US 9,565,294 B2, wherein the system includes means for interfacing to a currently operating Digital Subscriber Line operating within a DSL system, and wherein an active configuration of the currently operating DSL line is evaluated by collecting operational data, a plurality of candidate configurations for the currently operating DSL line is determined, one of which is selected based on a preferred operational characteristic, and the currently operating DSL line is transitioned from operating using the active configuration for the DSL line to operating using the selected configuration for the DSL line. The optimization of a given DSL line as described in US 9,565,294 B2 may be subjected to single-line constraints or to multi-line constraints, wherein multi-line constraints include requirements, which take into consideration more than one DSL line.

From US 2006/268733 A1 a method of controlling a DSL system is known, wherein channel and noise characteristics are modelled using one or more Hidden Markov Models (HMMs) by modeling the state dynamics for one or more lines and associated profiles and by learning from the line history, and wherein, besides channel and noise characteristics, user data activity also can be modeled using an HMM. Also known are US 2011/134983 A1, relating to methods, apparatus and articles of manufacture to limit data rates of digital subscriber lines, EP 2 209 324 A1, relating to management of telecommunications connections, and US 2010/162359 A1, relating to network user usage profiling.

It is an object of the invention to show a way to improve the operation of xDSL connections, and in particular to show an improved or alternative way for the selection of operating parameters of individual xDSL connections.

The inventive solution is provided by the features of the independent claims. Accordingly, the object of the invention is achieved by a method according to claim 1, by a controlling device according to claim 8 and a system according to claim 9. Preferred and/or advantageous embodiments are provided in the dependent claims.

Generally, any aspect or advantage described in the following with respect to the subject matter of an independent claim also relates to the subject matter of any other independent claim. In particular, any aspect or advantage described in the following in the context of a method generally also applies in the context of a device or system and vice versa.

It is to be noted that in the context of the present invention, if not stated otherwise, the term DSL shall refer to xDSL, in other words the term DSL shall encompass any known or future DSL technology, such as for example to ADSL, SDSL, HDSL, VDSL, ADSL2, ADSL2+, HDSL2, SHDSL, VDSL2, vectored VDSL2 or G.fast.

It is further to be noted that in the context of the present invention, if not stated otherwise, the term DSL connection profile shall refer to a profile which comprises a set of parameter values based on which a DSL connection may be configured. A DSL connection profile may exemplary comprise values for parameters of a DSL connection such as data rate, power spectral density (PSD), SNR margin, spectral mask, forward error correction (FEC) parameters, interleaving parameters, band plan parameters, bit loading parameters, or any other adjustable parameter of a DSL connection.

A DSL connection profile utilized for configuring a DSL connection influences the characteristics of the DSL connection regarding bandwidth, stability and/or latency. The term bandwidth shall refer to the maximum available data rate of a DSL connection.

A core aspect of the present invention may be seen in that prior to the optimization of a DSL connection a DSL usage profile is selected based on which a DSL connection optimization is performed, wherein for this purpose a number of predefined DSL usage profiles are provided and from these at least one is selected on the basis of stored parameter values of predefined parameters associated with the DSL connection to be optimized. The selection of a DSL usage profile is performed automatically by a controlling device, wherein parameter values of a wide variety of different parameters may be taken into account.

Brief Description of the Figures

It is shown in

Fig. 1 a schematic view of an exemplary and simplified DSL-based communication system,
Fig. 2 a schematic view of an exemplary embodiment of an inventive controlling device,
Fig. 3 a schematic flowchart of the steps of a first exemplary embodiment of an inventive method, and
Fig. 4 a schematic flowchart of the steps of a second exemplary embodiment of an inventive method.

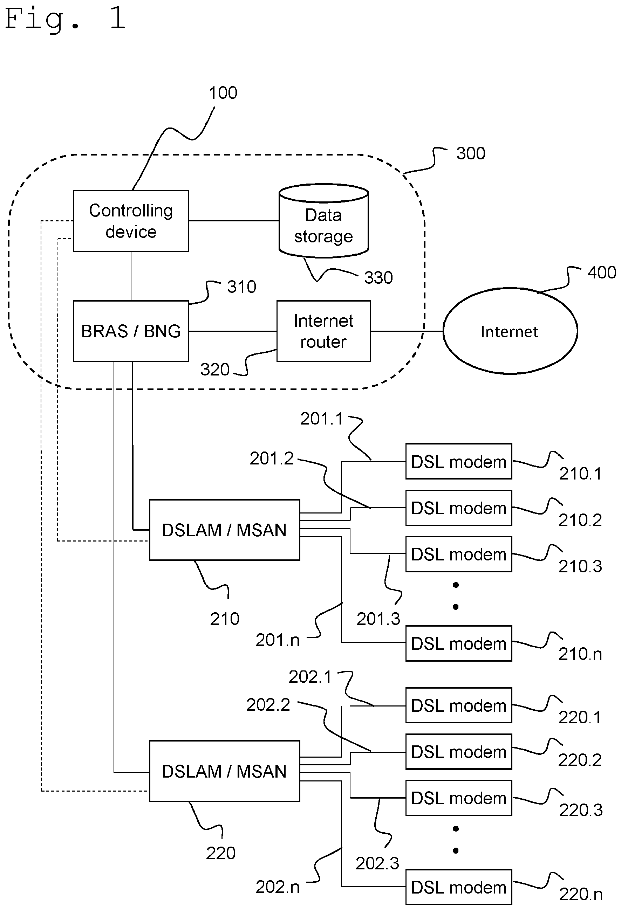

Fig. 1 schematically shows a DSL-based communication system, comprising two DSLAMs 210 and 220, wherein instead of either one or both of the DSLAMs 210 and 220 also respective MSANs may be provided. Since a DSL-based communication system typically comprises a plurality of DSLAMs and/or MSANs, the two DSLAMs or MSANs 210 and 220 shown in Fig. 1 are only exemplary. The DSLAM 210 is connected via DSL connections 201.1 to 201.n to a respective number of DSL modems 210.1 to 210.n, said DSL modems being located at customer premises.

Similarly, DSLAM 220 is connected via DSL connections 202.1 to 202.n to a respective number of DSL modems 220.1 to 220.n.

The term DSL connection on the one hand refers to the physical connection between the respective DSL modems, which typically is provided in the form of a copper cable, and on the other hand to the communication connection based on a DSL communication protocol, in particular according to one of the above stated DSL-related standards.

The customer premises DSL modems 210.1 to 210.n and 220.1 to 220.n may be used to connect a computer or router not shown in Fig. 1 to the respective telephone line for providing the digital subscriber line service for connection to the Internet. Each of the DSL modems 210.1 to 210.n and 220.1 to 220.n may also be provided as a DSL router, which is a standalone device that combines the function of a DSL modem and a router, and can connect multiple computers through multiple Ethernet ports or an integral wireless access point. The use of DSL routers, which are also referred to as residential gateways, for providing Internet access for a variety of customer premises equipment (CPE) has become quite common, wherein the DSL router usually manages the connection and sharing of the DSL service in a home network or small office network.

In the shown embodiment the DSLAMs or MSANs 210 and 220 are connected to a Broadband remote access server (BRAS) or Broadband Network Gateway (BNG) 310 which routes traffic to and from the DSLAMs or MSANs 210 and 220. The BRAS or BNG 310 is located at the edge of an Internet service provider's backbone network 300, wherein said backbone network may also be referred to as a core network.

In the embodiment shown in Fig. 1 the BRAS or BNG 310 is connected to an Internet router 320 which routes traffic to and from the Internet 400. A typical backbone network of an Internet service provider comprises a plurality of interconnected devices or servers. Accordingly, the backbone network 300 is shown in Fig. 1 in a highly simplified manner. For instance, the BRAS or BNG 310 typically also is the interface to authentication, authorization and accounting systems, which are not shown in Fig. 1.

It is known to perform an optimization of a DSL connection, such as the DSL connections 201.1 to 201.n or 202.1 to 202.n, by adapting the configuration of the DSL connection depending on collected operational data, wherein in particular an optimum configuration is tried to achieve, which is stable and at the same time provides a high data rate, in other words an optimum trade-off between stability and speed is tried to achieve by known optimizations.

However, there may be different needs depending on the customer's usage of the DSL connection. For example, customers with a TV product are more likely to report customer interference than customers without a TV product but with a comparable connection, if impairments are measured on these connections, for example coding violations. Unfortunately, these different types of customer's usage, which may also be referred to as customer segments, are often not known and cannot be identified directly.

Therefore, a method is proposed, which allows to identify different customer segments which have different requirements regarding xDSL connections, wherein based on at least one identified customer segment, a DSL connection profile for a DSL connection is automatically selected.

For this purpose parameter values of predefined parameters associated with an individual DSL connection are stored in at least one storage unit, wherein said individual DSL connection may for example be one of the DSL connections 201.1 to 201.n and 202.1 to 202.n shown in Fig. 1. An exemplary storage unit is shown in Fig. 1 as data storage 330, located in the backbone network 300.

Further, a controlling device 100 is provided, which is connected to data storage 330 and which is adapted to retrieve the stored parameter values from data storage 330, wherein said stored parameter values may be associated with an individual DSL connection or may be associated with a group or set of DSL connections.

For an individual DSL connection the controlling device 100 selects at least one DSL usage profile from a number of predefined DSL usage profiles as a matching DSL usage profile depending on parameter values, which are stored in data storage 330 and which are associated with the individual DSL connection, wherein the at least one matching DSL usage profile matches the stored parameter values.

The pre-defined usage profiles may be represented by target and/or threshold values of predefined parameters, which define a requirement associated with the DSL connection, such as bandwidth, stability and/or latency.

The pre-defined usage profiles may also be stored in data storage 330 or they may be stored in a storage unit of controlling device 100.

The customer associated with the individual DSL connection has a requirement with respect to bandwidth, stability and/or latency of the DSL connection, wherein said requirement may depend on various parameters.

From the stored parameter values with advantage a measure for the probability of a certain requirement being associated with the DSL connection is calculated by the controlling device 100, wherein such requirement may for example be bandwidth, stability and/or latency of the DSL connection. The calculated probability may then be compared with the pre-defined DSL usage profiles to select the at least one matching DSL usage profile.

The controlling device 100 selects a DSL connection profile for the individual DSL connection from a number of predefined DSL connection profiles depending on the selected at least one DSL usage profile, which matches the stored parameter values. The individual DSL connection is then operated, wherein connection parameters of the DSL connection are controlled using the selected DSL connection profile.

Thus, by utilizing the controlling device 100 an adaptive control of various transmission parameters is performed, wherein these transmission parameters may comprise data rate, power spectral density (PSD), SNR margin, spectral mask, forward error correction (FEC) parameters, interleaving parameters, band plan parameters, bit loading parameters, or any other adjustable parameter of the DSL connection.

For controlling the operation of the DSL connections the controlling device 100 may be connected directly to the respective DSLAMs or MSANs 210 and 220, as indicated in Fig. 1. However, also the BRAS or BNG 310 may be utilized for this purpose, wherein the controlling device 100 is connected to BRAS or BNG 310.

In the following examples for DSL usage profiles or customer segments are given:

    1. TV: high stability but lower limit for bandwidth
    2. Surfing, home office: medium stability and maximum bandwidth
    3. Gaming: low latency, high stability
    4. VoIP: high stability, low bandwidth
    5. Alarm system, elevator, M2M: very high stability, low bandwidth

The above DSL usage profiles only give a general definition. Depending on the type of DSL connection and on booked services and/or booked data rate, each of the above DSL usage profile may be associated with definite values for thresholds to be met with respect to bandwidth, stability and/or latency, wherein threshold values for bandwidth may be given in bits/second, threshold values for stability may be given in re-initializations per time unit and threshold values for latency may be given in milliseconds, said values being stored with the respective DSL usage profile.

Since a wide variety of parameters may be correlated with DSL usage, with advantage parameter values of a plurality of different parameters are stored in the data storage 330 and are utilized for selecting the at least one matching DSL usage profile.

In the next step, data of all customers from different data sources is collected, said data allowing a conclusion as to the applicability of these usage scenarios.

Possible data sources for the parameter values are:

- DNS calls: gaming DNS, video streaming DNS, surfing DNS
- Cookies (visits of pages relating to gaming, video streaming, forums, etc.)
- Image quality from deep packet inspection of IP traffic
- Image quality from algorithm in a set top box
- Interruptions of video streams
- Stability of the DSL connection from a separate stability model
- Coding violation, error seconds, full initializations, data rate, severe error seconds, unavailable seconds, call drops, etc.
- Data consumption in the course of the day
- Data throughput in the course of the day
- Social milieu
- Place of residence
- Booked service
- Household income
- Number of persons in the household
- Type of DSL router in use
- Devices in the home network: Determined by the router and possibly by mapping via MAC address range
- WLAN names of the devices in the home network
- Used target IP addresses
- Packet content via packet sniffer
- SNMP traffic
- Explicit customer request from customer contact

In addition, also threshold values or percentiles of these values or of aggregations of these values may be stored as parameter values.

For technical reasons, certain parameter values may not be available for individual DSL connections, but only for a group or set of DSL connections, such as all DSL connections that are connected to a specific DSLAM or MSAN, or all DSL connections that are associated with a certain booked service such as TV. The reason may be that the respective parameter values are not accessible for an individual DSL connection due to data encryption, or that the respective parameter value is determined by a device, which is located in the backbone network 300, said device having no access to individual DSL connections or data associated with individual DSL connections.

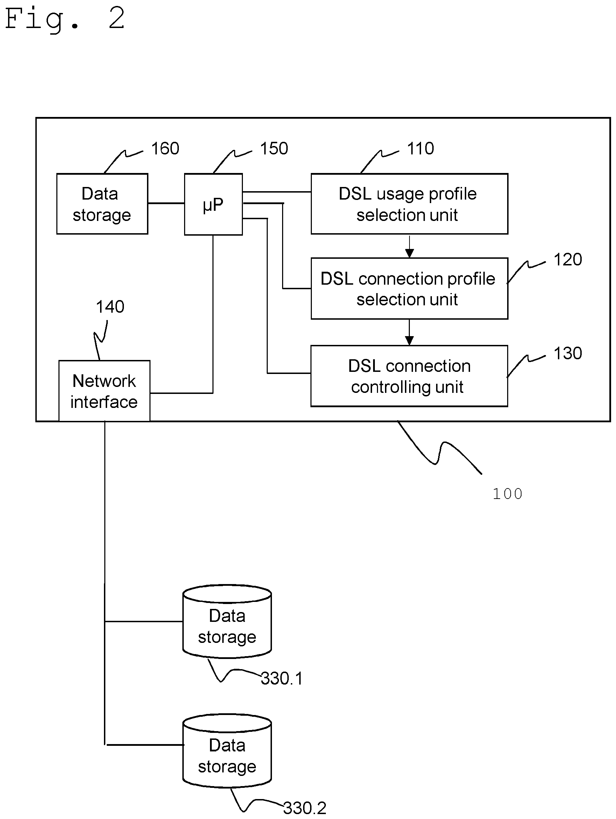

In Fig. 2 an exemplary and schematic design of a controlling device 100 is shown. Typically, the controlling device 100 is provided as a computer having a microprocessor 150, a data storage unit 160, and a network interface 140 for communicating within the backbone network 300 and possibly directly with one or more DSLAMs or MSANs. In the embodiment shown in Fig. 2 the controlling device 100 comprises a DSL usage profile selection unit 110, a DSL connection profile selection unit 120 and a DSL connection controlling unit 130, wherein each of these is provided as a software unit, which is executed by microprocessor 150. The software unit 110, 120 and 130 may be adapted to directly exchange data, in particular selected DSL usage profiles and selected DSL connection profiles. This is indicated by the arrows shown in Fig. 2.

The controlling device 100 may be a single server, but may also be provided by a system of several interconnected servers. Furthermore, although in Fig. 1 only one exemplary data storage 330 is shown, there may be provided several or a plurality of data storage devices, indicated by data storages 330.1 and 330.2 as shown in Fig. 2. Since with advantage a plurality of different parameter values is used to select a DSL usage profile, in particular also a data warehouse or data lake may be utilized.

After respectively assigning all or some of the DSL connections 201.1-201.n and 202.1-202.n to at least one DSL usage profile or customer segment, the respective DSL connection is optimized for one or possibly several characteristics such as bandwidth, stability and/or latency.

The success of the assignment is automatically rated through evaluating occurring customer fault requests and technical quality parameters, such as coding violation, error seconds, full initializations, data rate, severe error seconds, unavailable seconds, call drops, or any other suitable operational parameter available.

For instance, by means of the selected DSL usage profile for different customer groups or segments or booked services different threshold values may be defined, which define the stability of the connections.

Based on this determined stability the automatic regulation of the optimization of the DSL connections is controlled.

If for example connections of customers with TV connection are regulated, from the customer's view these are less stable than comparable connections without TV having the same characteristic values. Therefore, TV connections are then regulated towards a more stable state than other connections, but then also have less speed, i.e. data rate. Besides speed and stability some connections or segments may also be optimized regarding signal delay, i.e. latency.

With advantage a threshold value of a measured value under consideration, which indicates an unstable connection, is determined from the customer ticket quotient depending on the measured value under consideration. Herein, a maximum customer ticket quotient is defined.

For the customer ticket quotient of a segment the following equation may be given:

```
TQ = number of tickets / (number of connections * counting
interval)
```

The measured value under consideration advantageously is selected in such a way that there is a high correlation coefficient with the ticket quotient. This is for example the case for coding violations.

If the evaluation of operational parameters should provide a result which indicates that the selected DSL connection profile is not suitable for the selected DSL usage profile or the selected DSL usage profile does not match the determined operational parameters, a re-selection may be effected. This is described in more detail below.

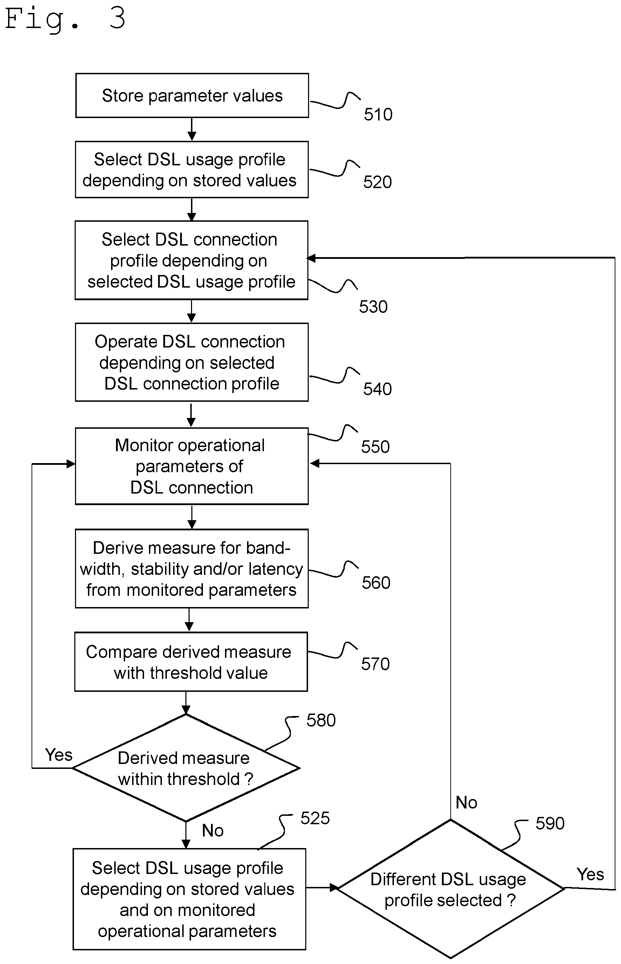

In the following, a preferred embodiment of a method of selecting a DSL connection profile for a DSL connection is described with reference to Fig. 3, wherein the steps are performed by controlling device 100, if not stated otherwise.

In step 510 the above described parameter values are stored, for example in data storage 330. Depending on these stored parameter values, in step 520 a DSL usage profile is selected by the DSL usage profile selection unit 110. Depending on the selected DSL usage profile, in step 530 a DSL connection profile is selected by the DSL connection profile selection unit 120. In step 540 the DSL connection is operated depending on the selected DSL connection profile, wherein for this purpose transmission parameters of the DSL connection are controlled by the controlling unit 130.

During operation of the DSL connection, in step 550 operational parameters of the DSL connection are monitored, wherein for monitoring known tools or management entities may be utilized, which provide the values of the monitored operational parameters to the controlling device 100. From the monitored operational parameters a measure for bandwidth, stability and/or latency of the DSL connection is derived in step 560. The monitored operational parameters of the DSL connection for example comprises at least one of coding violations per time unit, error seconds per time unit, full initializations per time unit, severe error seconds per time unit, unavailable seconds per time unit, call drops per time unit, or data rate.

In step 570 the derived measure is compared with a respective threshold value defined by the selected DSL usage profile. In step 580 it is checked whether the comparison result indicates that the derived measure lies within the threshold.

If this is case, the monitoring is continued by repeating step 550. If the derived measure does not lie within the threshold, in step 525 a DSL usage profile is again selected, wherein this time the selection is performed depending on the stored parameter values and depending on the monitored operational parameters.

If it is determined in step 590 that a different DSL usage profile has been selected, then the selection of the DSL connection profile is repeated depending on the newly selected DSL usage profile by repeating step 530. If, however, no different DSL usage profile has been selected in step 525, then the monitoring is continued by repeating step 550.

In a further preferred embodiment, the selection of the DSL usage profile is performed using a machine learning algorithm. The utilized machine learning algorithm may be any one of an artificial neural network, a decision tree, a support vector machine, a Bayesian network or a Regession analysis algorithm, and it may employ at least one of supervised learning, unsupervised learning, semi-supervised learning, reinforcement learning, feature learning, anomaly detection or association rules.

In particular, the employed machine learning algorithm is a clustering algorithm, which maps similar feature vectors into a common region within a map in a target space, wherein the target space has fewer dimensions than the feature vectors, and wherein the target space preferably is two-dimensional.

In a first step, by means of a customer survey it may be determined which of the pre-defined usage scenarios applies to the respective customer. The data from this survey may be utilized as a training set for the machine learning algorithm.

The stored parameter values are then used to assign, by means of the machine learning or clustering algorithm, all remaining DSL connections, which are not comprised in the training set.

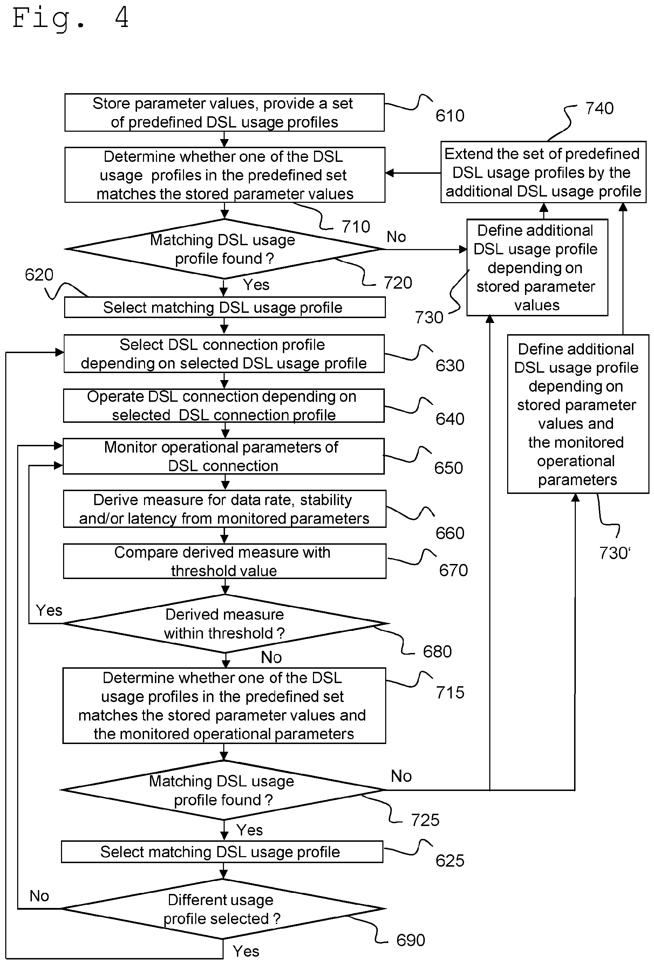

In the following, a further preferred embodiment of a method of selecting a DSL connection profile for a DSL connection is described with reference to Fig. 4, wherein again the steps are performed by controlling device 100, if not stated otherwise.

In step 610 the above described parameter values are stored, for example in data storage 330, and a set of predefined DSL usage profiles is provided, for example in storage unit 160 of controlling device 100 or also in data storage 330.

Depending on the stored parameter values, in step 710 it is determined whether one of the DSL usage profile in the predefined set of DSL usage profiles matches the stored parameter values, wherein this is in particular determined using a machine learning algorithm.

If it determined in step 720 that a matching DSL usage profile has been found, this DSL usage profile is selected in step 620 by the DSL usage profile selection unit 110, otherwise an additional DSL usage profile is defined depending in the stored parameter values in step 730 and the set of predefined DSL usage profiles is extended by the additional DSL usage profile in step 740, after which it is again determined whether one of the DSL usage profiles in the now extended predefined set of DSL usage profiles matches the stored parameter values by repeating step 710. This is repeated, until a matching DSL usage profile is found in step 720.

After the DSL usage profile is selected in step 620, depending on the selected DSL usage profile, in step 630 a DSL connection profile is selected by the DSL connection profile selection unit 120. In step 640 the DSL connection is operated depending on the selected DSL connection profile, wherein for this purpose transmission parameters of the DSL connection are controlled by the controlling unit 130.

During operation of the DSL connection, in step 650 operational parameters of the DSL connection are monitored, wherein for monitoring known tools or management entities may be utilized, which provide the values of the monitored operational parameters to the controlling device 100. From the monitored operational parameters a measure for bandwidth, stability and/or latency of the DSL connection is derived in step 660. The monitored operational parameters of the DSL connection for example comprises at least one of coding violations per time unit, error seconds per time unit, full initializations per time unit, severe error seconds per time unit, unavailable seconds per time unit, call drops per time unit, or data rate.

In step 670 the derived measure is compared with a respective threshold value defined by the selected DSL usage profile. In step 680 it is checked whether the comparison result indicates that the derived measure lies within the threshold.

If this is case, the monitoring is continued by repeating step 650. If the derived measure does not lie within the threshold, in step 715 it is determined whether one of the DSL usage profiles in the predefined set matches the stored parameter values and the monitored operational parameters.

If it determined in step 725 that a matching DSL usage profile has been found, this DSL usage profile is selected in step 625 by the DSL usage profile selection unit 110, otherwise an additional DSL usage profile is defined depending on the stored parameter values and the monitored operational parameters in step 730' and the set of predefined DSL usage profiles is extended by the additional DSL usage profile in step 740, after which it is again determined whether one of the DSL usage profiles in the now extended predefined set of DSL usage profiles matches the stored parameter values by repeating step 710.

After the DSL usage profile is selected in step 625, it is determined in step 690 whether a different DSL usage profile has been selected. If this is the case, the selection of the DSL connection profile is repeated depending on the newly selected DSL usage profile by repeating step 630. If, however, no different DSL usage profile has been selected in step 625, then the monitoring is continued by repeating step 650.

The monitored operational parameters may therefore also be again re-introduced into the machine-learning model, which possibly leads to a new segment assignment. The whole method is automatically executed in a mining tool or program, controlled by the controlling device 100, wherein the DSL connection profile optimization is also performed automatically.

In particular through the utilization of a clustering algorithm it can be determined that there are new customer segments or new DSL usage profiles, which need to be treated differently from the known ones.

At least some of the preferred aspects are again summarized below.

According to one aspect, a method of selecting a DSL connection profile for a DSL connection by a controlling device is provided, comprising the steps of

    a) storing parameter values of predefined parameters associated with the DSL connection in at least one storage unit,
    b) selecting, by the controlling device, at least one DSL usage profile from a number of predefined DSL usage profiles as a matching DSL usage profile depending on the stored parameter values, wherein the at least one matching usage profile matches the stored parameter values,
    c) selecting, by the controlling device, a DSL connection profile for the DSL connection from a number of predefined DSL connection profiles depending on the selected at least one DSL usage profile, and
    d) operating the DSL connection, wherein connection parameters of the DSL connection are controlled using the selected DSL connection profile.

Each DSL usage profile defines at least one threshold value for a bandwidth, a stability and/or a latency of a DSL connection.

The method comprises the steps of monitoring at least one operational parameter of the DSL connection, deriving from monitored values of said at least one operational parameter a measure for the bandwidth, stability and/or latency of the DSL connection, comparing the derived measure with a respective threshold value which is defined by the at least one matching DSL usage profile, determining, depending on the result of the comparison, whether the monitored values of the at least one operational parameter match the DSL usage profile currently selected as a matching DSL usage profile, wherein, if the monitored values do not match, step b) is repeated, wherein the at least one DSL usage profile is selected as a matching DSL usage profile also depending on the monitored values of the at least one operational parameter, and if a different DSL usage profile is selected as a matching DSL usage profile in the repeated step b), steps c) and d) are repeated.

The monitored at least one operational parameter of the DSL connection preferably comprises at least one of coding violations per time unit, error seconds per time unit, full initializations per time unit, severe error seconds per time unit, unavailable seconds per time unit, call drops per time unit, and data rate.

In a preferred embodiment, step b) is performed using a machine learning algorithm. Preferably, the machine learning algorithm is trained using training data sets, wherein each training data set corresponds to a different one of a set of training DSL connections and comprises parameter values of the predefined parameters associated with the respective training DSL connection and an information identifying the DSL usage profile of the predefined DSL usage profiles which is associated with the respective training DSL connection.

Preferably, the machine learning algorithm is a clustering algorithm and the method comprises the steps of determining that none of the predefined DSL usage profiles sufficiently matches the provided parameter values, defining an additional DSL usage profile depending on the provided parameter values, extending the number of predefined DSL usage profiles with said additional DSL usage profile, and selecting said additional DSL usage profile as a matching DSL usage profile.

Preferably, the predefined parameters comprise user-related parameters of at least one individual user associated with the DSL connection and/or user-related parameters related to a group of users associated with a plurality of DSL connections, wherein the DSL connection is comprised in said plurality of DSL connections.

In another preferred embodiment the selected DSL usage profile defines a time-dependent DSL usage and steps c) and d) are repeatedly performed with different DSL connection profiles being selected, wherein the points in time at which steps c) and d) are repeated are defined by time information comprised in the selected DSL usage profile.

Thereby, a DSL usage profile may for instance define different DSL usages for different times of the day.

According to another aspect a controlling device for controlling connection parameters of at least one DSL connection is provided, which is adapted to perform a method as described above, and which comprises a first storage unit and/or an interface for accessing at least one second storage unit, wherein said first and at least one second storage units are adapted for storing parameter values of predefined parameters associated with the at least one DSL connection, a DSL usage profile selection unit, which is adapted to select for a DSL connection at least one DSL usage profile from a number of predefined DSL usage profiles as a matching DSL usage profile depending on stored parameter values of predefined parameters associated with the respective DSL connection, wherein the at least one matching usage profile matches the stored parameter values, and wherein each DSL usage profile defines at least one threshold value for a bandwidth, a stability and/or a latency of a DSL connection, a DSL connection profile selection unit coupled to the DSL usage profile selection unit, adapted to select a DSL connection profile for a DSL connection from a number of predefined DSL connection profiles depending on at least one DSL usage profile selected by the DSL usage profile selection unit, and a controlling unit coupled to the DSL connection profile selection unit, adapted to control connection parameters of a DSL connection using a DSL connection profile selected by DSL connection profile selection unit.

In a further aspect a system for controlling connection parameters of a plurality of DSL connections is provided, comprising at least one DSLAM or MSAN connectable to a plurality of customer premises DSL modems, a controlling device as described above, coupled to the at least one DSLAM or MSAN, wherein the controlling device is adapted to control connection parameters of a plurality of DSL connections which are established between the at least one DSLAM or MSAN and the plurality of customer premises DSL modems, respectively.

**Claims**

1.  A method of selecting a DSL connection profile for a DSL connection (201, 202) by a controlling device (100), comprising the steps of

    a) storing (510, 610) parameter values of predefined parameters associated with the DSL connection (201, 202) in at least one storage unit (330),
    b) selecting (520, 620), by the controlling device (100), at least one DSL usage profile from a number of predefined DSL usage profiles as a matching DSL usage profile depending on the stored parameter values, wherein the at least one matching usage profile matches the stored parameter values, and wherein each DSL usage profile defines at least one threshold value for a bandwidth, a stability and/or a latency of a DSL connection,
    c) selecting (530, 630), by the controlling device (100), a DSL connection profile for the DSL connection (201, 202) from a number of predefined DSL connection profiles depending on the selected at least one DSL usage profile, and

d) operating (540, 640) the DSL connection (201, 202), wherein connection parameters of the DSL connection (201, 202) are controlled using the selected DSL connection profile,

further comprising the steps of:

- monitoring (550, 650) at least one operational parameter of the DSL connection,
- deriving (560, 660) from monitored values of said at least one operational parameter a measure for the bandwidth, stability and/or latency of the DSL connection (201, 202),
- comparing (570, 670) the derived measure with a respective threshold value which is defined by the at least one matching DSL usage profile,
- determining (580, 680), depending on the result of the comparison, whether the monitored values of the at least one operational parameter match the DSL usage profile currently selected as a matching DSL usage profile, and
- if the monitored values do not match,
- step b) is repeated, wherein the at least one DSL usage profile is selected (525, 625) as a matching DSL usage profile also depending on the monitored values of the at least one operational parameter, and
- if a different DSL usage profile is selected as a matching DSL usage profile in the repeated step b), steps c) and d) are repeated.

2. The method of claim 1, wherein the monitored at least one operational parameter of the DSL connection (201, 202) comprises at least one of

- coding violations per time unit,
- error seconds per time unit,
- full initializations per time unit,
- severe error seconds per time unit,
- unavailable seconds per time unit,
- call drops per time unit, and
- data rate.

3. The method of any one of the preceding claims, wherein step b) is performed using a machine learning algorithm.

4. The method of claim 3, wherein the machine learning algorithm is trained using training data sets, wherein each training data set corresponds to a different one of a set of training DSL connections and comprises

- parameter values of the predefined parameters associated with the respective training DSL connection and
- an information identifying the DSL usage profile of the predefined DSL usage profiles which is associated with the respective training DSL connection.

5. The method of any one of claims 3 or 4, wherein the machine learning algorithm is a clustering algorithm and the method comprises the steps of

- determining that none of the predefined DSL usage profiles sufficiently matches the provided parameter values,
- defining (730) an additional DSL usage profile depending on the provided parameter values,
- extending (740) the number of predefined DSL usage profiles with said additional DSL usage profile,
- selecting said additional DSL usage profile as a matching DSL usage profile.

6. The method of any one of the preceding claims, wherein the predefined parameters comprise user-related parameters of at least one individual user associated with the DSL connection and/or user-related parameters related to a group of users associated with a plurality of DSL connections, wherein the DSL connection is comprised in said plurality of DSL connections.

7. The method of any one of the preceding claims, wherein the selected DSL usage profile defines a time-dependent DSL usage and steps c) and d) are repeatedly performed with different DSL connection profiles being selected, wherein the points in time at which steps c) and d) are repeated are defined by time information comprised in the selected DSL usage profile.

**8.** A controlling device (100) for controlling connection parameters of at least one DSL connection (201, 202), adapted to perform a method according to any one of claims 1 to 7, comprising

- a first storage unit (160) and/or an interface (140) for accessing at least one second storage unit (330), wherein said first and at least one second storage units are adapted for storing parameter values of predefined parameters associated with the at least one DSL connection,
- a DSL usage profile selection unit (110), which is adapted to select for a DSL connection at least one DSL usage profile from a number of predefined DSL usage profiles as a matching DSL usage profile depending on stored parameter values of predefined parameters associated with the respective DSL connection, wherein the at least one matching usage profile matches the stored parameter values, and wherein each DSL usage profile defines at least one threshold value for a bandwidth, a stability and/or a latency of a DSL connection,
- a DSL connection profile selection unit (120) coupled to the DSL usage profile selection unit (110), adapted to select a DSL connection profile for a DSL connection from a number of predefined DSL connection profiles depending on at least one DSL usage profile selected by the DSL usage profile selection unit, and
- a controlling unit (130) coupled to the DSL connection profile selection unit (120), adapted to control connection parameters of a DSL connection using a DSL connection profile selected by DSL connection profile selection unit.

**9.** A system for controlling connection parameters of a plurality of DSL connections (201, 202), comprising

- at least one DSLAM (210 ,220) connectable to a plurality of customer premises DSL modems (210.1-210.n, 220.1-220.n),
- a controlling device (100) according to claim 8, coupled to the at least one DSLAM (210, 220), wherein the controlling device (100) is adapted to control connection parameters of a plurality of DSL connections (201.1-201.n, 202.1-202.n) which are respectively established between the at least one DSLAM (210, 220) and the plurality of customer premises DSL modems (210.1-210.n, 220.1-220.n).

**Patentansprüche**

**1.** Verfahren zum Auswählen eines DSL-Verbindungsprofils für eine DSL-Verbindung (201, 202) durch eine Steuervorrichtung (100), umfassend die folgenden Schritte:

a) Speichern (510, 610) von Parameterwerten vordefinierter Parameter, die der DSL-Verbindung (201, 202) zugeordnet sind, in wenigstens einer Speichereinheit (330),
b) Auswählen (520, 620) wenigstens eines DSL-Nutzungsprofils aus einer Anzahl von vordefinierten DSL-Nutzungsprofilen als passendes DSL-Nutzungsprofil in Abhängigkeit von den gespeicherten Parameterwerten durch die Steuereinrichtung (100), wobei das wenigstens eine passende Nutzungsprofil mit den gespeicherten Parameterwerten übereinstimmt, und wobei jedes DSL-Nutzungsprofil wenigstens einen Schwellwert für eine Bandbreite, eine Stabilität und/oder eine Latenz einer DSL-Verbindung definiert,
c) Auswählen (530, 630) eines DSL-Verbindungsprofils für die DSL-Verbindung (201, 202) aus einer Anzahl von vordefinierten DSL-Verbindungsprofilen in Abhängigkeit von dem ausgewählten mindestens einen DSL-Nutzungsprofil durch die Steuereinrichtung (100), und
d) Betreiben (540, 640) der DSL-Verbindung (201, 202), wobei Verbindungsparameter der DSL-Verbindung (201, 202) unter Verwendung des ausgewählten DSL-Verbindungsprofils gesteuert werden,

ferner umfassend die Schritte:

- Überwachen (550, 650) wenigstens eines Betriebsparameters der DSL-Verbindung,
- Ableiten (560, 660) eines Maßes für die Bandbreite, Stabilität und/oder Latenz der DSL-Verbindung (201, 202) aus überwachten Werten des wenigstens einen Betriebsparameters,
- Vergleichen (570, 670) des abgeleiteten Maßes mit einem jeweiligen Schwellwert, der durch das wenigstens eine passende DSL-Nutzungsprofil definiert ist,
- Ermitteln (580, 680), abhängig vom Ergebnis des Vergleichs, ob die überwachten Werte des wenigstens einen Betriebsparameters mit dem aktuell als passendes DSL-Nutzungsprofil ausgewählten DSL-Nutzungsprofil übereinstimmen, und
- wenn die überwachten Werte nicht übereinstimmen,
- wird Schritt b) wiederholt, wobei das wenigstens eine DSL-Nutzungsprofil auch in Abhängigkeit von den überwachten Werten des wenigstens einen Betriebsparameters als passendes DSL-Nutzungsprofil ausgewählt wird (525, 625), und

- wenn im wiederholten Schritt b) ein anderes DSL-Nutzungsprofil als passendes DSL-Nutzungsprofil ausgewählt wird, werden die Schritte c) und d) wiederholt.

2. Verfahren nach Anspruch 1, wobei der überwachte wenigstens eine Betriebsparameter der DSL-Verbindung (201, 202) wenigstens einen der folgenden Parameter umfasst:

- Kodierungsverletzungen pro Zeiteinheit,
- Fehlersekunden pro Zeiteinheit,
- Vollinitialisierungen pro Zeiteinheit,
- Sekunden mit schweren Fehlern pro Zeiteinheit,
- Nichtverfügbarkeitssekunden pro Zeiteinheit,
- Verbindungsabbrüche pro Zeiteinheit und
- Datenrate.

3. Verfahren nach einem der vorstehenden Ansprüche, wobei Schritt b) unter Verwendung eines maschinellen Lernalgorithmus durchgeführt wird.

4. Verfahren nach Anspruch 3, wobei der maschinelle Lernalgorithmus unter Verwendung von Trainingsdatensätzen trainiert wird, wobei jeder Trainingsdatensatz einer anderen aus einem Satz von Trainings-DSL-Verbindungen entspricht und Folgendes umfasst:

- Parameterwerte der vordefinierten Parameter, die der jeweiligen Trainings-DSL-Verbindung zugeordnet sind, und
- eine Information, die das DSL-Nutzungsprofil der vordefinierten DSL-Nutzungsprofile identifiziert, das der jeweiligen Trainings-DSL-Verbindung zugeordnet ist.

5. Verfahren nach einem der Ansprüche 3 oder 4, wobei der maschinelle Lernalgorithmus ein Clustering-Algorithmus ist und das Verfahren die folgenden Schritte umfasst

- Feststellen, dass keines der vordefinierten DSL-Nutzungsprofile ausreichend mit den bereitgestellten Parameterwerten übereinstimmt,
- Definieren (730) eines zusätzlichen DSL-Nutzungsprofils in Abhängigkeit von den bereitgestellten Parameterwerten,
- Erweitern (740) der Anzahl der vordefinierten DSL-Nutzungsprofile um das zusätzliche DSL-Nutzungsprofil,
- Auswählen des zusätzlichen DSL-Nutzungsprofils als ein passendes DSL-Nutzungsprofil.

6. Verfahren nach einem der vorstehenden Ansprüche, wobei die vordefinierten Parameter benutzerbezogene Parameter wenigstens eines individuellen Benutzers, welcher der DSL-Verbindung zugeordnet ist, und/oder benutzerbezogene Parameter, die mit einer Gruppe von Benutzern, welche einer Vielzahl von DSL-Verbindungen zugeordnet sind, verknüpft sind, umfassen, wobei die DSL-Verbindung in der Vielzahl von DSL-Verbindungen enthalten ist.

7. Verfahren nach einem der vorstehenden Ansprüche, wobei das ausgewählte DSL-Nutzungsprofil eine zeitabhängige DSL-Nutzung definiert und die Schritte c) und d) wiederholt ausgeführt werden, wobei unterschiedliche DSL-Verbindungsprofile ausgewählt werden, wobei die Zeitpunkte, zu denen die Schritte c) und d) wiederholt werden, durch Zeitinformationen definiert sind, die in dem ausgewählten DSL-Nutzungsprofil enthalten sind.

8. Steuervorrichtung (100) zur Steuerung von Verbindungsparametern wenigstens einer DSL-Verbindung (201, 202), ausgebildet zur Durchführung eines Verfahrens nach einem der Ansprüche 1 bis 7, umfassend

- eine erste Speichereinheit (160) und/oder eine Schnittstelle (140) zum Zugriff auf wenigstens eine zweite Speichereinheit (330), wobei die erste und die wenigstens eine zweite Speichereinheit zum Speichern von Parameterwerten von vordefinierten, der wenigstens einen DSL-Verbindung zugeordneten Parametern ausgebildet sind,
- eine DSL-Nutzungsprofil-Auswahleinheit (110), die ausgebildet ist, für eine DSL-Verbindung wenigstens ein DSL-Nutzungsprofil aus einer Anzahl von vordefinierten DSL-Nutzungsprofilen als ein passendes DSL-Nutzungsprofil in Abhängigkeit von gespeicherten Parameterwerten von vordefinierten Parametern, die der jeweiligen DSL-Verbindung zugeordnet sind, auszuwählen, wobei das wenigstens eine passende Nutzungsprofil mit den gespeicherten Parameterwerten übereinstimmt, und wobei jedes DSL-Nutzungsprofil wenigstens einen Schwellwert für eine Bandbreite, eine Stabilität und/oder eine Latenz einer DSL-Verbindung definiert,

- eine mit der DSL-Nutzungsprofil-Auswahleinheit (110) gekoppelte DSL-Verbindungsprofil-Auswahleinheit (120), die ausgebildet ist, ein DSL-Verbindungsprofil für eine DSL-Verbindung aus einer Anzahl von vordefinierten DSL-Verbindungsprofilen in Abhängigkeit von wenigstens einem durch die DSL-Nutzungsprofil-Auswahleinheit ausgewählten DSL-Nutzungsprofil auszuwählen, und

- eine Steuereinheit (130), die mit der DSL-Verbindungsprofil-Auswahleinheit (120) gekoppelt ist und dazu ausgebildet ist, Verbindungsparameter einer DSL-Verbindung unter Verwendung eines von der DSL-Verbindungsprofil-Auswahleinheit ausgewählten DSL-Verbindungsprofils zu steuern.

9. System zur Steuerung von Verbindungsparametern einer Vielzahl von DSL-Verbindungen (201, 202), umfassend

- wenigstens einen DSLAM (210, 220), der mit einer Vielzahl von kundenseitigen DSL-Modems (210.1-210.n, 220.1-220.n) verbindbar ist,

- eine Steuervorrichtung (100) nach Anspruch 8, die mit dem wenigstens einen DSLAM (210, 220) gekoppelt ist, wobei die Steuervorrichtung (100) dazu ausgebildet ist, Verbindungsparameter einer Vielzahl von DSL-Verbindungen (201.1-201.n, 202.1-202.n) zu steuern, die jeweils zwischen dem wenigstens einen DSLAM (210, 220) und der Vielzahl von kundenseitigen DSL-Modems (210.1-210.n, 220.1-220.n) hergestellt werden.

**Revendications**

1. Procédé de sélection d'un profil de connexion DSL pour une connexion DSL (201, 202) par un dispositif de commande (100), comprenant les étapes suivantes

a) le stockage (510, 610) de valeurs de paramètre de paramètres prédéfinis associés à la connexion DSL (201, 202) dans au moins une unité de stockage (330),

b) la sélection (520, 620), par le dispositif de commande (100), d'au moins un profil d'utilisation de DSL à partir d'un nombre de profils d'utilisation de DSL prédéfinis comme un profil d'utilisation de DSL correspondant en fonction des valeurs de paramètre stockées, dans lequel l'au moins un profil d'utilisation correspondant correspond aux valeurs de paramètre stockées, et dans lequel chaque profil d'utilisation de DSL définit au moins une valeur de seuil pour une largeur de bande, une stabilité et/ou une latence d'une connexion DSL,

c) la sélection (530, 630), par le dispositif de commande (100), d'un profil de connexion DSL pour la connexion DSL (201, 202) à partir d'un nombre de profils de connexion DSL prédéfinis en fonction de l'au moins un profil d'utilisation de DSL sélectionné, et

d) le fonctionnement (540, 640) de la connexion DSL (201, 202), dans lequel des paramètres de connexion de la connexion DSL (201, 202) sont commandés en utilisant le profil de connexion DSL sélectionné,

comprenant en outre les étapes suivantes :

- la surveillance (550, 650) d'au moins un paramètre de fonctionnement de la connexion DSL,

- l'obtention (560, 660) à partir des valeurs surveillées dudit au moins un paramètre de fonctionnement d'une mesure pour la largeur de bande, la stabilité et/ou la latence de la connexion DSL (201, 202),

- la comparaison (570, 670) de la mesure obtenue avec une valeur de seuil respective qui est définie par l'au moins un profil d'utilisation de DSL correspondant,

- la détermination (580, 680), en fonction du résultat de la comparaison, si les valeurs surveillées de l'au moins un paramètre de fonctionnement correspondent au profil d'utilisation de DSL actuellement sélectionné comme un profil d'utilisation de DSL correspondant, et

- si les valeurs surveillées ne correspondent pas,

- l'étape b) est répétée, dans lequel l'au moins un profil d'utilisation de DSL est sélectionné (525, 625) comme un profil d'utilisation de DSL correspondant également en fonction des valeurs surveillées de l'au moins un paramètre de fonctionnement, et

- si un profil d'utilisation de DSL différent est sélectionné comme un profil d'utilisation de DSL correspondant dans l'étape b) répétée, les étapes c) et d) sont répétées.

2. Procédé selon la revendication 1, dans lequel l'au moins un paramètre de fonctionnement surveillé de la connexion DSL (201, 202) comprend au moins un parmi

- violations de codage par unité de temps,
- secondes d'erreur par unité de temps,
- initialisations complètes par unité de temps,
- secondes d'erreur grave par unité de temps,
- secondes indisponibles par unité de temps,
- pertes d'appel par unité de temps, et
- débit de données.

3. Procédé selon l'une quelconque des revendications précédentes, dans lequel l'étape b) est réalisée en utilisant un algorithme d'apprentissage machine.

4. Procédé selon la revendication 3, dans lequel l'algorithme d'apprentissage machine est formé en utilisant des ensembles de données de formation, dans lequel chaque ensemble de données de formation correspond à une différente parmi un ensemble de connexions DSL de formation et comprend

- des valeurs de paramètre des paramètres prédéfinis associés à la connexion DSL de formation respective et
- une information identifiant le profil d'utilisation de DSL parmi les profils d'utilisation de DSL prédéfinis qui est associé à la connexion DSL de formation respective.

5. Procédé selon l'une quelconque des revendications 3 ou 4, dans lequel l'algorithme d'apprentissage machine est un algorithme de groupement et le procédé comprend les étapes suivantes

- la détermination qu'aucun des profils d'utilisation de DSL prédéfinis ne correspond suffisamment aux valeurs de paramètre fournies,
- la définition (730) d'un profil d'utilisation de DSL supplémentaire en fonction des valeurs de paramètre fournies,
- l'extension (740) du nombre de profils d'utilisation de DSL prédéfinis avec ledit profil d'utilisation de DSL supplémentaire,
- la sélection dudit profil d'utilisation de DSL supplémentaire comme un profil d'utilisation de DSL correspondant.

6. Procédé selon l'une quelconque des revendications précédentes, dans lequel les paramètres prédéfinis comprennent des paramètres liés à l'utilisateur d'au moins un utilisateur individuel associé à la connexion DSL et/ou des paramètres liés à l'utilisateur relatifs à un groupe d'utilisateur associé à une pluralité de connexions DSL, dans lequel la connexion DSL est comprise dans ladite pluralité de connexions DSL.

7. Procédé selon l'une quelconque des revendications précédentes, dans lequel le profil d'utilisation de DSL sélectionné définit une utilisation de DSL dépendante du temps et les étapes c) et d) sont réalisées à plusieurs reprises avec différents profils de connexion DSL qui sont sélectionnés, dans lequel les points temporels auxquels les étapes c) et d) sont répétées sont définis par des informations temporelles comprises dans le profil d'utilisation de DSL sélectionné.

8. Dispositif de commande (100) pour la commande de paramètres de connexion d'au moins une connexion DSL (201, 202), adapté pour réaliser un procédé selon l'une quelconque des revendications 1 à 7, comprenant

- une première unité de stockage (160) et/ou une interface (140) pour accéder à au moins une seconde unité de stockage (330), dans lequel lesdites première et au moins une seconde unités de stockage sont adaptées pour le stockage de valeurs de paramètre de paramètres prédéfinis associés à l'au moins une connexion DSL,
- une unité de sélection de profil d'utilisation de DSL (110) qui est adaptée pour sélectionner pour une connexion DSL au moins un profil d'utilisation de DSL à partir d'un nombre de profils d'utilisation de DSL prédéfinis comme un profil d'utilisation de DSL correspondant en fonction des valeurs de paramètre stockées de paramètres prédéfinis associés à la connexion DSL respective, dans lequel l'au moins un profil d'utilisation correspondant correspond aux valeurs de paramètre stockées, et dans lequel chaque profil d'utilisation de DSL définit au moins une valeur de seuil pour une largeur de bande, une stabilité et/ou une latence d'une connexion DSL,
- une unité de sélection de profil de connexion DSL (120) couplée à l'unité de sélection de profil d'utilisation de DSL (110), adaptée pour sélectionner un profil de connexion DSL pour une connexion DSL à partir d'un nombre de profils de connexion DSL prédéfinis en fonction d'au moins un profil d'utilisation de DSL sélectionné par l'unité de sélection de profil d'utilisation de DSL, et
- une unité de commande (130) couplée à l'unité de sélection de profil de connexion DSL (120), adaptée pour commander des paramètres de connexion d'une connexion DSL en utilisant un profil de connexion DSL sélectionné par l'unité de sélection de profil de connexion DSL.

9. Système pour la commande de paramètres de connexion d'une pluralité de connexions DSL (201, 202), comprenant

- au moins un DSLAM (210, 220) pouvant être connecté à une pluralité de modems DSL de locaux de client (210.1-210.n, 220.1-220.n),
- un dispositif de commande (100) selon la revendication 8, couplé à l'au moins un DSLAM (210, 220), dans lequel le dispositif de commande (100) est adapté pour commander des paramètres de connexion d'une pluralité de connexions DSL (201.1-201.n, 202.1-202.n) qui sont établies respectivement entre l'au moins un DSLAM (210, 220) et la pluralité de modems DSL de locaux de client (210.1-210.n, 220.1-220.n) .

Fig. 1

# Fig. 2

# Fig. 3

```
┌─────────────────────────┐
│  Store parameter values │  ～ 510
└─────────────────────────┘
            │
            ▼
┌─────────────────────────┐
│  Select DSL usage profile│  ～ 520
│  depending on stored values│
└─────────────────────────┘
            │
            ▼
┌─────────────────────────┐
│  Select DSL connection  │
│  profile depending on   │  ～ 530
│  selected DSL usage profile│
└─────────────────────────┘
            │
            ▼
┌─────────────────────────┐
│  Operate DSL connection │
│  depending on selected  │  ～ 540
│  DSL connection profile │
└─────────────────────────┘
            │
            ▼
┌─────────────────────────┐
│  Monitor operational    │  ～ 550
│  parameters of          │
│  DSL connection         │
└─────────────────────────┘
            │
            ▼
┌─────────────────────────┐
│  Derive measure for band-│
│  width, stability and/or latency│  ～ 560
│  from monitored parameters│
└─────────────────────────┘
            │
            ▼
┌─────────────────────────┐
│  Compare derived measure│  ～ 570
│  with threshold value   │
└─────────────────────────┘
            │
            ▼
        ╱ 580
  ◇ Derived measure        ── Yes
    within threshold ?
        │ No   ～ 525
        ▼
┌─────────────────────────┐        ◇ Different DSL usage  ── Yes
│  Select DSL usage profile│       profile selected ?   ～ 590
│  depending on stored values│            │ No
│  and on monitored       │
│  operational parameters │
└─────────────────────────┘
```

# Fig. 4

```
┌─────────────────────────────┐
│ Store parameter values, provide a set │         740
│ of predefined DSL usage profiles     │ ── 610      ┌──────────────────────┐
└─────────────────────────────┘              │ Extend the set of predefined │
┌─────────────────────────────┐              │ DSL usage profiles by the   │
│ Determine whether one of the DSL │ ◄─────────│ additional DSL usage profile │
│ usage  profiles in the predefined set │         └──────────────────────┘
│ matches the stored parameter values │
└─────────────────────────────┘
            │          710
            ▼                                   ┌──────────────────┐
       ◇ Matching DSL usage        No           │ Define additional    │
       ◇ profile found ?    ─────────────────►  │ DSL usage profile    │
            │          720                       │ depending on         │
            │ Yes                                │ stored parameter     │
   620      ▼                                    │ values               │
┌─────────────────────────────┐    730          └──────────────────┘
│ Select matching DSL usage profile │
└─────────────────────────────┘
            │                                    ┌──────────────────┐
            ▼                                    │ Define additional    │
┌─────────────────────────────┐                 │ DSL usage profile    │
│ Select DSL connection profile │  ── 630        │ depending on         │
│ depending on selected DSL usage profile │     │ stored parameter     │
└─────────────────────────────┘                 │ values and           │
            │                                    │ the monitored        │
            ▼                                    │ operational          │
┌─────────────────────────────┐  ── 640         │ parameters           │
│ Operate DSL connection depending on │         └──────────────────┘
│ selected  DSL connection profile │
└─────────────────────────────┘
            │
            ▼
┌─────────────────────────────┐  ── 650
│ Monitor operational parameters of │
│ DSL connection │
└─────────────────────────────┘
            │
            ▼
┌─────────────────────────────┐
│ Derive measure for data rate, stability │
│ and/or latency from monitored parameters │
└─────────────────────────────┘  ── 660
            │
            ▼
┌─────────────────────────────┐
│ Compare derived measure with │
│ threshold value │  ── 670
└─────────────────────────────┘
            │
            ▼
  Yes   ◇ Derived measure
  ◄─────◇ within threshold ?
            │          680
            │ No
            ▼
┌─────────────────────────────┐  ── 715
│ Determine whether one of the DSL │
│ usage profiles in the predefined set │
│ matches the stored parameter values and │
│ the monitored operational parameters │
└─────────────────────────────┘
            │
            ▼
       ◇ Matching DSL usage        No
       ◇ profile found ?    ───────────────►
            │          725
            │ Yes
            ▼
┌─────────────────────────────┐  ── 625
│ Select matching DSL usage profile │
└─────────────────────────────┘
            │
            ▼
  No    ◇ Different usage
  ◄─────◇ profile selected ?
            │          690
            │ Yes
```

730'

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9565294 B2
- US 2006268733 A1
- US 2011134983 A1
- EP 2209324 A1
- US 2010162359 A1